# EUROPEAN PATENT APPLICATION

(11) **EP 4 586 414 A1**
(43) Date of publication of application: **16.07.2025**
(21) Application number: 24151380.3
(22) Date of filing: 11.01.2024
(51) Int. Cl.: H01R 13/193, H01R 13/53

(54) **HIGH VOLTAGE ELECTRICAL CONNECTOR, CONTACT ASSEMBLY, CONNECTION CABLE AND VEHICLE**

(71) Applicant: ZF CV Systems Global GmbH, 3006 Bern (CH)
(72) Inventor: CENTKOWSKI, Adam, 51-505 Wroclaw (PL)
(74) Representative: Copi, Joachim

(57) **Abstract**

The invention is directed to a high voltage electrical connector (100) for establishing a safe and frictionless electrical connection (E) to a connection receiving pin (202) that extends in a longitudinal direction (L), the high voltage electrical connector (100) comprising at least one contact element (102) for connecting the respective connection receiving pin (202) and a driving element (104). The driving element is configured to move the contact element from an inserted state (IS) in which a position (Pc) of the contact element along the longitudinal direction overlaps at least partially with a position (Pp) of the pin, to a contacted state (CS) in which a mechanical contact (M) between the contact element and the pin is established. According to the invention, in the inserted state, the contact element and the pin are separated by a distance amount (D) in a radial direction perpendicular to the longitudinal direction.

## Description

The present invention relates to a high voltage electrical connector for establishing an electrical connection with one or more pins that extend in a longitudinal direction that comprises at least one contact element for contacting the respective pin.

The invention is also directed to a contact assembly for establishing an electrical connection, to a connection cable, to a method for establishing an electrical connection between a high voltage electrical connector and a pin, to a vehicle, in particular an electrical vehicle, and to a commercial vehicle.

High voltage electrical connectors of the kind mentioned above are known in art in principle. High voltage electrical connectors with appliance at commercial vehicles are often subject of hazardous environment and thus need to be resistant against such environment and also should be laid out for high cycle numbers of use as far as possible whereas a transmission of high voltage when in use is to be safely secured.

E.g. in US 2020/0176935 A1 it is described a high voltage connector, connected to a device, that experiences a reduced electromagnetic interference (EMI), avoids galvanic corrosion of dissimilar metals within or without a fluid environment, and provides an effective electrical ground system.

The scientific publication "Influence of corrosion processes on friction and wear of tin coatings of wire connectors", Tribologia 6/2020, p. 13-19, ISSN 0208-7774 (DOI: 10.5604/01.3001.0014.8331) describes the results of metallographic, tribological, and microscopic tests of wire connectors.

This document shows that the structure and thickness of the tin layer (or in general of any coating) on the copper element (or in general on a base material) varies greatly. It includes the results of tribological investigations for electrical connectors in the initial state and covered with a layer of oxides formed as a result of corrosion. The results of tribological tests have shown a great influence of the oxide layer on friction and wear of coatings. The results of friction factor measurements were confirmed by microscopic observations. FIG. 7, FIG. 8 and FIG. 9 of this scientific publication show SEM images of the surface topography of abrasion traces caused by friction.

Thus, a low mating cycle number for high-voltages connectors is caused, among other reasons, by the limited resistance of the contact's surface. Due to the friction cause during mating, the surface of contact degrades. After a certain number of mating cycles, the surface and it's coating is damaged to the point that the resistance of the contact is too high to operate safely.

This is where the invention comes in, wherein it is an objective of the present invention to provide an electrical connector that enables a larger number of mating cycles, and thus an extended lifetime whereas the high voltage electrical connector should be adapted to establish a safe electrical connection even in view of larger number of mating cycles.

This objective is achieved in a first aspect by the invention by a high voltage electrical connector according to claim 1 or establishing a safe electrical connection.

The high voltage electrical connector is suitable for establishing a safe --and particularly frictionless-- electrical connection with one or more connection receiving pins that extend in a longitudinal direction. The receiving pins are also referred to as tab contacts.

The high voltage electrical connector comprises at least one contact element, also referred to as receptacle contact, for connecting the respective pin and a driving element that is configured to move the at least one contact element from an inserted state in which a position of the contact element along the longitudinal direction overlaps at least partially with a position of the respective pin, to a contacted state in which a mechanical contact between the contact element and the pin is established, wherein in the at least partially overlapping position of the inserted state the contact element and the pin are separated by a distance amount in a radial direction perpendicular to the longitudinal direction.

In the inserted state, the contact element and the pin have overlapping positions, i.e. the projections of the contact element and of the pin on the longitudinal direction overlap.

However, no electrical contact is yet provided, since the contact element and the pin are separated by a distance amount, in a radial direction that is perpendicular to the longitudinal direction. Once in this inserted state, the driving element is advantageously configured to drive a movement of the contact element such that the radial distance between the contact element and the pin is reduced until the contact element establishes a mechanical contact with the corresponding pin. Therefore, there is no sliding of the contact element against the pin, as in known connectors, and the stress on the contact surface is highly reduced, thereby enabling a larger number of mating cycles. According to the invention, the final mating position between the contact element and the respective pin or tab contact is reached from a substantially perpendicular direction without friction in the longitudinal direction. In other words, once the connector is in connected state the connection is established due to a substantially radial movement of a receptacle contact or contact element, resulting in a reduced or even vanishing friction.

Further advantageous developments of the invention are found in the dependent claims and indicate in detail advantageous possibilities to realize the concept described above within the scope of the object as well as with regard to further advantages.

In the following, developments of the high voltage electrical connector of the first aspect will be discussed.

In the frame of this invention, the term high voltage refers to DC voltage values above 20 VDC, preferably above 30 VDC, more preferably above 50 VDC. However, the high voltage electrical connector can be also used for electrical connections involving a lower voltage value. Preferably, and for safety reasons, the contact element is housed within a housing element. The housing element, in particular a protective housing element, defines an inner volume in which the contact element is arranged, such that the risk of a user touching the contact element is minimized. The housing element is preferably configured to cooperatively mate with a corresponding housing element, also particularly in the form of a respective protective housing element, of the pin, such that, in the inserted state, the contact element and the pin are not accessible from outside the housing elements by a user, and the risk of an electric shock is reduced.

In a development, the driving element comprises an actuator unit that is configured to drive the movement of the contact element in the radial direction, such that in a first actuation state of the actuator unit the contact element and the pin are separated by the distance amount and in a second actuation state of the actuator unit, the mechanical contact between the contact element and the pin is established. The actuator can be implemented in different developments as a button or a set of buttons or as a bi-stable actuator.

In another development, the driving element is further configured to move the contact element in the longitudinal direction until the position of the contact element along the longitudinal direction overlaps at least partially with the position of the pin and the contact element and the pin are separated by the distance amount.

In the coupled state the housing element of the electrical connector and the housing element of the pin are connected. For instance, the driving element is configured to move the contact element from said coupled state to the inserted state and from the inserted state to the contacted state. Thus, in a development, the user brings the high voltage electrical connector and the pin into the coupled state and then the driving element moves the contact element firstly into the inserted state and subsequently into the contacted state, where the electrical connection is established.

In yet another development, the driving element comprises a guiding element coupled to the contact element and configured to guide a movement of the contact element along a first section, where the guiding element extends substantially parallel to the longitudinal direction, and along second section wherein the guiding element extends in the radial direction. In a development, the first section that extends substantially parallel to the longitudinal extension corresponds to the movement of the contact element from the coupled position to the inserted position and the second section that has a radial component corresponds to the movement of the contact element from the inserted state to the contacted state. Preferably, an end section of the second section, that corresponds to a distal end of the guiding element, is arranged perpendicular to the longitudinal direction, so that the actual mechanical contact between the contact element and the corresponding pin takes place with no friction or sliding.

In another development the driving element comprises an actuator configured to drive a movement of the contact element in the radial direction, when moving the contact element from the inserted state to the contacted state. Preferably, the actuator is further configured to drive a movement of the contact element in the longitudinal direction prior to driving the movement of the contact element in the radial direction. The actuator may be further configured to mechanically secure the connection between the high voltage electrical connector and its counterpart, i.e. a cooperating connector that comprises the pin, such that an accidental disconnection is avoided. The actuator can therefore be a rotation lever that when actuated, rotates and causes the movement of the contact element relative to the pin and then secures the mechanical connection between the high voltage electrical connector and its counterpart by means of a fastening mechanism.

In yet another embodiment, the high voltage electrical connector further comprises a fastening unit configured to releasably fix the contact element in the contacted state, i.e. the fastening unit is configured to enable a fixed connection and a release of said fixed connection. This reduces the risk of an unintended de-coupling of the mechanical contact between the contact element and the pin by fixing the relative position between them forcing the mechanical contact. For de-coupling the mechanical contact, the fastening unit has to be actively actuated such that the contact element can move away from the pin.

Preferably, in another development, and for breaking the mechanical connection between the contact element and the pin, the driving element is further configured to move the at least one contact element, from the contacted state, in which the mechanical contact between the contact element and the pin is established, radially away from the pin, to the inserted state in which the position of the contact element along the longitudinal direction overlaps with the position of the respective pin and the contact element and the pin are separated by a distance amount. Thus, in this development, the movement between the inserted state and the connected state is reversible and thus, damage to the contact element and/or the pin during disengagement of the high voltage electrical connector is also reduced or avoided.

The high voltage electrical connector of the first aspect of the invention may comprise a plurality of contact elements for contacting one or more pins. For instance, in a development, the high voltage electrical connector comprises two contact elements for contacting a pin, such that the contact is established at substantially opposite sides of the pin, such that the force exerted upon contact on the pin by one of the contact elements counteracts the force exerted on the pin by the other contact element. In another development, the high voltage electrical connectors comprise a plurality of sets of two contacting elements, each set of two contacting elements configured to contact a respective pin. An exemplary high voltage electrical connector may comprise, two, three, four, five, six, seven, eight, nine, ten or more sets of one or more contact elements for contacting a respective pin.

A second aspect of the present invention is formed by a contact assembly that is suitable for establishing an electrical connection. The contact assembly comprising a socket element including at least one pin extending along a longitudinal direction and a high voltage electrical connector in accordance with any of the preceding claims. Preferably, in a development, the socket comprises a housing element, in particular a protective housing element, that defines an inner volume in which the pin is arranged, such that the pin does not protrude from said inner volume. It is also preferred, for safety reasons, that the high voltage electrical connector also comprises a housing element defining an inner volume in which the contact element is arranged. The housing element of the socket and the housing element of the high voltage electrical connector cooperate when the connector and the socket are mated for establishing the mechanical connection between the contact element and the pin.

The contact assembly of the second aspect of the invention thus shares the advantages of the high voltage electrical connector of the first aspect.

A third aspect of the present invention is formed by a connection cable. The connection cable of the invention comprises at least one high voltage electrical connectors in accordance with the first aspect of the invention. The high voltage electrical connector is arranged on one end of the connection cable, which also comprises one or more electrical lines connected to the at least one high voltage electrical connector. Preferably, in a particular development, the connection cable comprises a high voltage electrical connector in accordance with the first aspect the invention attached to a respective end of the connection cable.

A fourth aspect of the present invention is formed by a method for establishing an electrical connection between a high voltage electrical connector in accordance with the first aspect and a pin that extends in a longitudinal direction. The method comprises moving at least one contact element of the high voltage electrical connector, from an inserted state in which the position of the contact element along the longitudinal direction over-laps at least partially with the position of the respective pin and the contact element and the pin are separated by a distance amount, in a radial direction perpendicular to the longitudinal direction, to a contacted state in which a mechanical contact between the contact element and the pin is established. In a preferred development, the method also comprises a previous step that includes moving the contact element in the longitudinal direction until the position of the contact element along the longitudinal direction overlaps at least partially with the position of the pin and the contact element and the pin are separated by a distance amount before moving the contact element in the radial direction.

The invention also refers, in a fifth aspect, to a vehicle, in particular an electrical vehicle, comprising a contact assembly according to the second aspect of the invention and/or a connection cable according to the third aspect of the invention, in particular for an electrical connection between a battery unit and a junction box of the vehicle. A junction box, also referred to as high voltage junction box simplifies electric vehicle conversions and electric vehicle equipment installation by combining several aspects of electric vehicle conversion into a plug-and-play solution. It is connected to a high voltage battery unit and typically includes motor and controller feeds, main and auxiliary fuses, battery management system, high voltage contacts, such as pins to be connected with the high voltage electrical connector, charging controls and relays.

A vehicle, also in accordance with the invention, can be a commercial vehicle comprising a cabin and a trailer, wherein an electrical connection between a first set of one or more pins located in the cabin and a second set of respective pins located in the trailer is established using at least one high voltage electrical connector in accordance with the first aspect of the invention. The use of the inventive high voltage electrical connector for electrically coupling the cabin and the trailer is particularly advantageous due to the increased number of mating cycles that are achieved with the inventive high voltage electrical connector. Preferably the electrical connection is established using a connection cable in accordance with the third aspect of the invention.

These and other aspects of the invention will be apparent from and elucidated with reference to the embodiments described hereinafter.

The embodiments of the invention are described in the following on the basis of the drawing in comparison with the state of the art, which is also partly illustrated. The latter is not necessarily intended to represent the embodiments to scale. The drawing is, where useful for explanation, shown in schematized and/or slightly distorted form. With regard to additions to the teaching immediately recognizable from the drawing, reference is made to the relevant prior art. It should be kept in mind that numerous modifications and changes can be made to the form and detail of an embodiment without deviating from the general concept of the invention. The features of the invention disclosed in the description, in the drawing and in the claims may be essential for a further development of the invention, either individually or in any combination. In addition, all combinations of at least two of the features disclosed in the description, drawing and/or claims fall within the scope of the invention.

The general concept of the invention is not limited to the exact form or detail of the preferred embodiments shown and described below or to a subject matter, which would be limited in comparison to the subject matter as claimed in the claims.

For specified design ranges, values within specified limits of the ranges are also disclosed as limit values and thus are arbitrarily applicable and claimable.

The following drawing shows in:
- FIG. 1A: a schematic block diagram of a first exemplary embodiment of a contact assembly including a high voltage electrical connector in accordance the invention in an inserted state;
- FIG. 1B: a schematic block diagram of the exemplary contact assembly of FIG. 1A where the high voltage electrical connector is in a contacted state;
- FIG. 2A: a schematic block diagram of a second exemplary embodiment of a contact assembly including a high voltage electrical connector in accordance the invention prior to a mating with a corresponding socket;
- FIG. 2B: a schematic block diagram of the exemplary contact assembly of FIG. 2A where the high voltage electrical connector is in a inserted state;
- FIG. 2C: a schematic block diagram of the exemplary contact assembly of FIG. 2A where the high voltage electrical connector is in a contacted state;
- FIG. 3A: a schematic block diagram of a second exemplary embodiment of a contact assembly including a high voltage electrical connector in accordance the invention in a so called coupled state;
- FIG. 3B: a schematic block diagram of the exemplary contact assembly of FIG. 3A where the high voltage electrical connector is in a inserted state;
- FIG. 3C: a schematic block diagram of the exemplary contact assembly of FIG. 3A where the high voltage electrical connector is in a contacted state;
- FIG. 4: a schematic diagram of an exemplary connection cable in accordance with the present invention;
- FIG. 5: a schematic block diagram of an exemplary commercial vehicle including a connection cable in accordance with the invention; and
- FIG. 6: a flow diagram of an exemplary inventive method for establishing an electrical connection between a high voltage electrical connector in accordance with any of the preceding claims 1 to 7 and a pin that extends in a longitudinal direction;

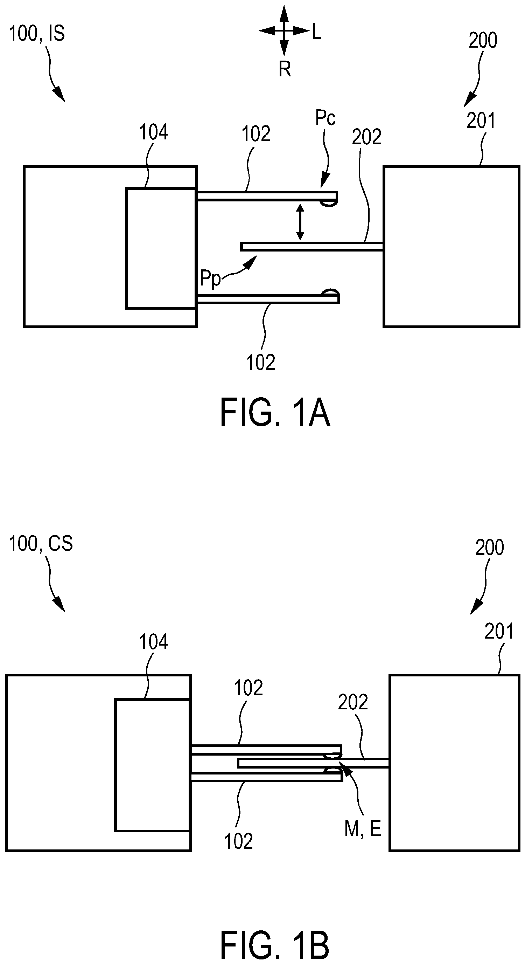

FIG. 1A shows a schematic block diagram of a first exemplary embodiment of a contact assembly 200 including a high voltage (HV) electrical connector 100 in accordance the invention in an inserted state IS. In turn, FIG. 1B shows a schematic block diagram of the exemplary contact assembly 200 of FIG. 1A where the high voltage electrical connector 100 is in a contacted state CS.

The contact assembly 200 is suitable for establishing an electrical connection between two terminals. The contact assembly 200 comprises a socket element 201 including at least one pin 202 extending along a longitudinal direction L. The contact assembly 200 also comprises a high voltage electrical connector 100 for establishing the electrical connection E with the pin 202. The high voltage electrical connector 100 comprises a set of two contact elements 102 that also extend along the longitudinal directions and are arranged and configured for connecting the pin 202. The HV electrical connector 100 comprises a driving element 104 that is configured to move the contact elements 102, from an inserted state IS shown in FIG 1A, in which a projection of the position Pc of the contact elements 102 along the longitudinal direction L overlaps at least partially with a projection of the position Pp of the pin 202 on said longitudinal direction, and in which the contact elements 102 and the pin 202 are separated by a distance amount D, the distance amount being measured in a radial direction perpendicular to the longitudinal direction, to a contacted state CS (see FIG. 1B) in which a mechanical contact M between the contact elements 102 and the pin 202 is established. Here, the contact elements are arranged to contact the pin at opposite sides thereof, such that the force exerted on the pin 202 by one of the contact elements is counteracted by the force exerted by the other pin. In this way, the resultant force on the pin is substantially zero. In other exemplary HV electrical connectors (not shown) there are three contact element per contacted pin, and the contact is established at three respective locations, with a relative angle of 120° between two contact elements.

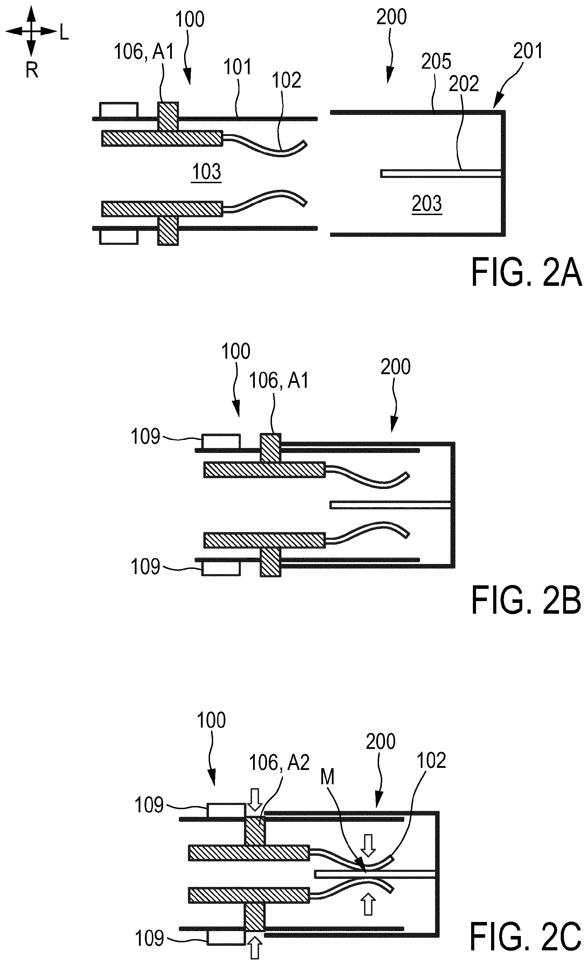

FIG. 2A shows a schematic block diagram of a second exemplary embodiment of a contact assembly 200 including a high voltage electrical connector 100 in accordance the invention prior to a mating with a corresponding socket element 201. For the sake of simplicity, the same reference numbers are used for those technical features having identical or similar functions. In order to increase the safety during operation and to comply with safety regulations, the contact elements 102 are housed within a housing element 101, in particular a housing element or enclosure, of the HV electrical connector 100. The housing element 101 defines an inner volume 103 in which the contact elements 102 are arranged. It is preferred that the contact elements 102 when not mated i.e. in a non-coupled state, do not protrude from the inner volume 103. Analogously, the socket element 210 also comprises a respective housing element 205, that defines an inner volume 203 in which the pin 202 is arranged. Also preferably, the pin 202 does not protrude from the inner volume 203. The contact elements 102 shown in FIGS. 2A to 2C have an S-like shape. Starting from a proximal end, the distance between the two contact elements first decreases until a minimum separation distance is reached and the increases again towards the distal end. The region of the contact element 102 wherein the separation distance is minimal is the region where the contact with the pin will be established, and is it found preferably on the same position along the longitudinal direction for all contact elements 102.

FIG. 2B shows a schematic block diagram of the exemplary contact assembly 200 of FIG. 2A where the high voltage electrical connector is in an inserted state IS. Now the HV electrical connector 100 is coupled to the socket element 210 and a projection of the position of the contact element 102 along the longitudinal direction L overlaps at least partially with a projection of the position of the pin along said longitudinal direction. In the inserted state shown in FIG. 2B the contact elements 102 and the pin 202 are separated by a distance amount, in a radial direction perpendicular to the longitudinal direction.

FIG. 2C shows in a schematic block diagram the exemplary contact assembly of FIG. 2A, where the high voltage electrical connector is in a contacted state. To reach this contacted state the driving element 104 (shown in FIG. 1A, FIG. 1B) is actuated. The actuation of the driving element causes a movement of the contact element 102 from the position shown in FIG. 2B, i.e. the inserted state, to a position in which a mechanical contact between the contact elements 102 and the pin 202 is established. By actuating the driving element 104, in this example in the form of an actuator unit 106, the contact elements 102 are moved in a radial direction until the mechanical contact is established, thus avoiding sliding friction between the cooperating contact elements 102 and pin 202. The actuator unit 106 is configured to drive the movement of the contact element 102 in the radial direction, such that in a first actuation state A1 of the actuator unit 106 (see e.g. FIG. 2A and FIG. 2B) the contact element 102 and the pin 202 are separated by the distance amount D and in a second actuation state A2 of the actuator unit 106 (see e.g. FIG 2C), the mechanical contact M between the contact element 102 and the pin 202 is established.

The HV electrical contact 100 of FIG. 2A to FIG. 2C also includes a fastening unit 109 configured to releasably fix the contact element 102 in the contacted state CS. For instance, the fastening unit 109 is configured to slide along the housing element 101 and block a movement of the actuator unit from the second actuation state A2 back to the first actuation state A1, therefore securing the mechanical contact between the contact elements 102 and the pin 202.

In another exemplary HV electrical contact (not shown), the actuator unit is actuated by an interaction of the housing element of socket element. For instance, when coupling the HV electrical connector to the socket element, the housing element is configured to actuate the actuator unit by applying a force that moves the actuator unit to the second actuator state. The HV electrical contact and the socket element are dimensioned such that the mechanical contact is established when the HV electrical connector abuts the socket element in the longitudinal direction.

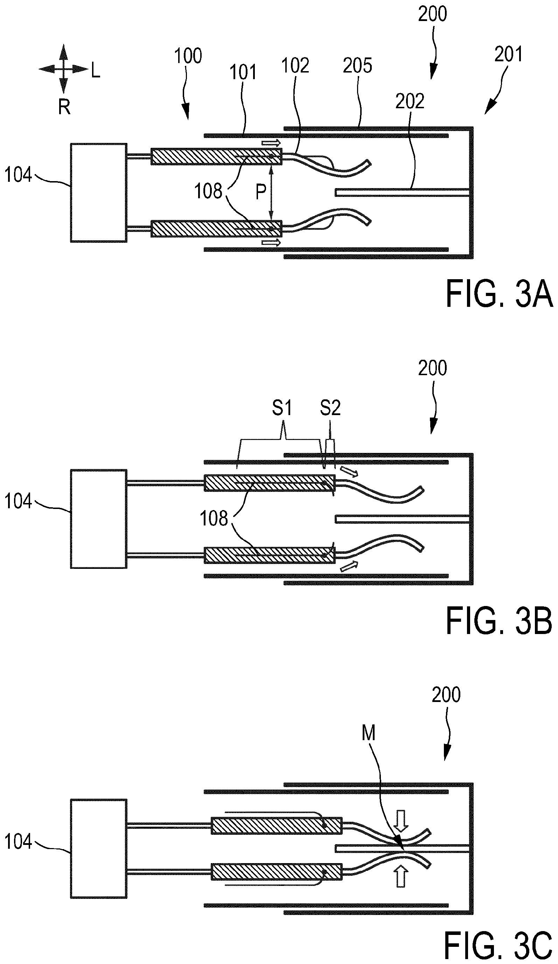

FIG. 3A to FIG. 3C each shows in a schematic block diagram of a second exemplary embodiment a contact assembly 200 including a high voltage electrical connector 100 in accordance the invention at three different states during a mating procedure.

In FIG. 3A a mid-point towards the inserted state is shown, namely starting from a coupled state in which the housing element 101 of the HV electrical connector 100 is coupled to the housing element 205 of the socket element 201.

FIG. 3B shows the contact assembly 200 with the contact elements 102 of the HV electrical connector 100 in the inserted state.

FIG. 3C shows the contact assembly 200 with the contact elements of the HV electrical connector 100 in the contacted state, i.e. having established a mechanical contact M with the pin 102.

In the exemplary high voltage electrical connector 100 of FIG. 3A to FIG. 3C the driving element 104 is further configured to move the contact elements 102 in the longitudinal direction. The contact elements 102 are moved until a projection of the position of the contact elements 102 along the longitudinal direction L overlaps at least partially with the projection of the position of the pin 202 in said longitudinal direction; in this state the contact element 102 and the pin 202 are separated by a distance amount. In particular, the driving element 104 comprises a guiding element 108 that is coupled to the contact elements 102 and configured to guide a movement of the contact element along a first section S1, where the guiding element 108 extends parallel to the longitudinal direction L, and along second section S2 wherein the guiding element extends substantially in the radial direction R. These first and second sections are shown in FIG. 3B. The guiding element 108 may for instance comprise a rail 108 having a straight first section S1 and a curved second section, and the contact elements are coupled to that rail. The position of the rails is fixed with respect to the housing element 101 and the contact elements 102 are movable on the rails and therefore their positions are variable with respect to the housing element 101. At the end of the straight first section S1, the contact elements 102 are in the inserted position. Further actuating the driving element 104 causes the contact elements 102 to move towards the pin until the mechanical contact M is established. Preferably, the end section of the guiding element 108 has a direction that is parallel to the radial direction R in order to minimize the risk of the contact elements 102 sliding against the pin 202. The contact position P between the rail 108 and the contact element 102 is indicated by a dot.

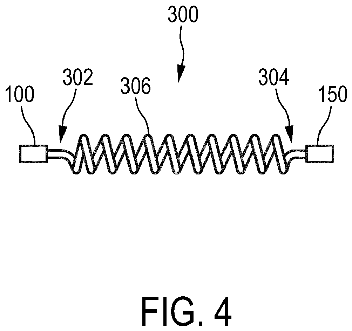

FIG. 4 is a schematic diagram of an exemplary connection cable 300 of an embodiment in accordance with the present invention. The connector cable 300 comprises a high voltage electrical connector 100 arranged on a first end 302 of the connection cable, and one or more electrical lines 306 connected to the at least one high voltage electrical connector 100.

In the cable 300 of said embodiment the second end 304 of the cable is attached to another electrical connector 150, which can also be a high voltage electrical connector in accordance with the invention. The cable 300 may be implemented as an extension cable, i.e., a cable that enables the use of appliances at some distance from a fixed socket.

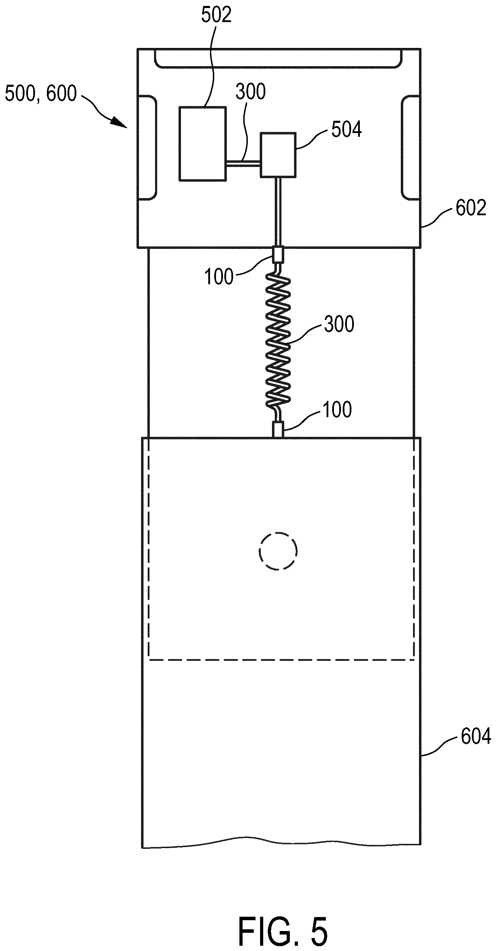

FIG. 5 shows in a schematic block diagram an exemplary vehicle 500, in particular an electric vehicle comprising a connection cable 300 according to the invention, in particular for an electrical connection between a battery unit 502 and a junction box 504 of the vehicle 500. Exemplarily, the vehicle 500 is a commercial vehicle 600 that comprises a cabin 602 and a trailer 604, and wherein an electrical connection between a first set of one or more pins located in the cabin 602 and a second set of respective pins located in the trailer 604 is established using at least one high voltage electrical connector 100 in accordance with the invention, and in particular using a connection cable 300 also in accordance with the invention. Via the connection cable 300 between the trailer and the cabin, the battery unit 502 in the cabin is electrically connected to the electric loads in the trailer and provision of electrical power to the trailer is enabled. The increased number of mating cycles that the high voltage electrical connector 100 enables due to the reduced friction between the contact elements and the pins is particularly advantageous for electrical connections, in particular high voltage electrical connections, which have to be coupled and decoupled regularly, such as that between the cabin 602 and the trailer 604.

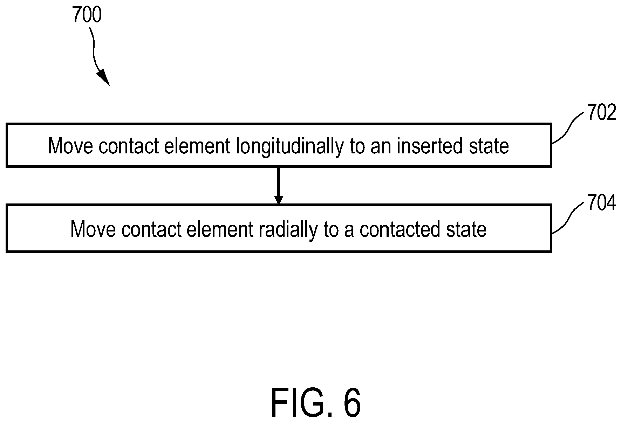

FIG. 6 a flow diagram of an exemplary method 700 for establishing an electrical connection between a high voltage electrical connector 100 as described above and a pin that extends in a longitudinal direction. The method comprises moving, in a step 702, the contact element in the longitudinal direction until the position of the contact element along the longitudinal direction overlaps with the position of the pin and the contact element and the pin are separated by a distance amount before moving the contact element in the radial direction, which is referred to as inserted state. The method 700 also comprises, in a step 704, moving the element of the high voltage electrical connector from the inserted state in which the position of the contact element along the longitudinal direction overlaps with the position of the respective pin and the contact element and the pin are separated by a distance amount, in a radial direction perpendicular to the longitudinal direction, to a contacted state in which a mechanical contact between the contact element and the pin is established.

In summary, the invention is directed to a high voltage electrical connector for establishing a safe and frictionless electrical connection to a connection receiving pin, also referred to as tab contact that extends in a longitudinal direction, the high voltage electrical connector comprising at least one contact element for connecting the respective connection receiving pin and a driving element. The driving element is configured to move the contact element from an inserted state in which a position of the contact element along the longitudinal direction overlaps at least partially with a position of the pin, to a contacted state in which a mechanical contact between the contact element and the pin is established. According to the invention, in the inserted state, the contact element and the pin are separated by a distance amount in a radial direction perpendicular to the longitudinal direction.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage. Any reference signs in the claims should not be construed as limiting the scope.

### REFERENCE LIST (PART OF THE DESCRIPTION)

- 100: high voltage -HV- electrical connector
- 101: housing element of the HV electrical connector
- 102: contact elements / receptacle contacts
- 103: inner volume of HV electrical connector
- 104: driving element
- 106: actuator unit
- 108: guiding element
- 109: fastening unit
- 150: electrical connector
- 200: contact assembly
- 201: socket element
- 202: connection receiving pin / tab contact
- 203: inner volume of socket element
- 205: housing element of socket element
- 210: socket element
- 300: connection cable
- 302: first end of connection cable
- 304: second end of connection cable
- 306: electrical lines
- 500: vehicle, electrical vehicle
- 502: battery unit
- 504: junction box
- 600: commercial vehicle
- 602: cabin
- 603: first set of one or more pins
- 604: trailer
- 605: second set of one or more pins
- 700: method
- 702: method step
- 704: step
- A1: first actuation state
- A2: second actuation state
- CS: contacted state
- D: distance amount
- E: electrical connection
- IS: inserted state
- L: longitudinal direction
- M: mechanical contact
- R: radial direction
- S1: straight first section
- S2: curved second section
- P: contact position
- Pc: position of contact element in inserted state
- Pp: position of pin in inserted state

## Claims

1. High voltage electrical connector (100) for establishing a safe electrical connection (E) to a connection receiving pin (202) that extends in a longitudinal direction (L), the high voltage electrical connector (100) comprising:
- at least one contact element (102) for connecting the respective connection receiving pin (202) and a driving element (104), the driving element (104) is configured to move the contact element (102):
- from an inserted state (IS) in which a position (Pc) of the contact element (102) along the longitudinal direction (L) overlaps at least partially with a position (Pp) of the connection receiving pin (202);
- to a contacted state (CS) in which a mechanical contact (M) between the con-tact element (102) and the connection receiving pin (202) is established,
**characterized in that**
in the at least partially overlapping position (Pc, Pp) of the inserted state (IS) the contact element (102) and the connection receiving pin (202) are separated by a distance amount (D) in a radial direction perpendicular to the longitudinal direction.

2. The high voltage electrical connector (100) of claim 1, wherein the at least one contact element (102) is housed within a housing element (101) that defines an inner volume (103) in which the at least one contact element (102) is arranged.

3. The high voltage electrical connector (100) of claim 1 or 2 claims, wherein the driving element (104) comprises an actuator unit (106) that is configured to drive the movement of the at least one contact element (102) in the radial direction (R), such that in a first actuation state (A1) of the actuator unit (106) the contact element (102) and the pin (202) are separated by the distance amount (D) and in a second actuation state (A2) of the actuator unit (106), the mechanical contact (M) between the contact element (102) and the pin (202) is established.

4. The high voltage electrical connector (100) of any of the preceding claims, wherein the driving element (104) is further configured to move the contact element (102) in the longitudinal direction (L) until the position (Pc) of the contact element (102) along the longitudinal direction (L) overlaps at least partially with the position (Pp) of the pin (202) and the contact element (102) and the pin (202) are separated by the distance amount (D).

5. The high voltage electrical connector (100) of any of the preceding claims, wherein the driving element (104) comprises a guiding element (108) coupled to the contact element (102) and configured to guide a movement of the contact element (102) along a first section (S1), where the guiding element (108) extends parallel to the longitudinal direction (L), and along second section wherein the guiding element (108) extends in the radial direction (R).

6. The high voltage electrical connector (100) of any of the preceding claims, further comprising a fastening unit (109) configured to releasably fix the contact element (102) in the contacted state (CS).

7. The high voltage electrical connector (100) of any of the preceding claims, wherein for breaking the mechanical connection (M) between the contact element (102) and the connection receiving pin (202), the driving element (104) is further configured to move the at least one contact element (102), from the contacted state (CS), in which the mechanical contact (M) between the contact element (102) and the connection receiving pin (202) is established, radially away from the connection receiving pin (202), to the inserted state (IS) in which the position of the contact element (102) along the longitudinal direction (L) overlaps with the position of the respective connection receiving pin (202), and the contact element (102) and the connection receiving pin (2029 are separated by a distance amount (D).

8. Contact assembly (200) for establishing an electrical connection (E), the contact assembly (200) comprising a socket element (201) including at least one connection receiving pin (202) extending along a longitudinal direction (L) and a high voltage electrical connector (100) in accordance with any of the preceding claims.

9. Connection cable (300) comprising at least one high voltage electrical connector (100) in accordance with any of the preceding claims 1 to 7, the high voltage electrical connector (100) being arranged on a respective end (302, 304) of the connection cable (300), and one or more electrical lines (306) connected to the at least one high voltage electrical connector (100).

10. Method (700) for establishing an electrical connection (E) between a high voltage electrical connector (100) in accordance with any of the preceding claims 1 to 7 and a connection receiving pin (202) that extends in a longitudinal direction (L), the method comprising
- moving (704) the at least one contact element (102) of the high voltage electrical connector (100), from an inserted state (IS) in which the position of the contact element (102) along the longitudinal direction (L) overlaps with the position of the respective connection receiving pin (202) and the contact element (102) and the connection receiving pin (202) are separated by a distance amount (D), in a radial direction (R) perpendicular to the longitudinal direction (L), to a contacted state (CS) in which a mechanical contact (M) between the contact element (102) and the connection receiving pin (202) is established.

11. The method (700) of claim 10, further comprising:
- moving (702) the contact element (102) in the longitudinal direction (L) until the position of the contact element (102) along the longitudinal direction (L) overlaps with the position of the connection receiving pin (202) and the contact element (102) and the connection receiving pin (202) are separated by a distance amount (D) before moving the contact element (102) in the radial direction (R).

12. Vehicle (500), in particular an electrical vehicle (500), comprising a contact assembly (200) according to claim 8 and/or a connection cable (300) according to claim 9, in particular for an electrical connection between a battery unit (502) and a junction box (504) of the vehicle (500).

13. Commercial vehicle (600) comprising a cabin (602) and a trailer (604), wherein an electrical connection (E) between a first set of one or more pins (603) located in the cabin (602) and a second set of respective pins (605) located in the trailer (604) is established using at least one high voltage electrical connector (100) in accordance with any of the preceding claims 1 to 7.

14. The commercial vehicle (600) of claim 13, wherein the electrical connection (E) is established using a connection cable (300) in accordance with claim 9.
